Europäisches Patentamt

European Patent Office

Office européen des brevets

(11) Veröffentlichungsnummer: **0 505 679 A1**

## (12) EUROPÄISCHE PATENTANMELDUNG

(21) Anmeldenummer: **92101067.4**

(51) Int. Cl.5: **B65G 15/02**

(22) Anmeldetag: **23.01.92**

(30) Priorität: **27.03.91 CH 943/91**

(43) Veröffentlichungstag der Anmeldung:
**30.09.92 Patentblatt 92/40**

(84) Benannte Vertragsstaaten:
**DE FR GB IT**

(71) Anmelder: **GRAPHA-HOLDING AG**
**Seestrasse 41**
**CH-6052 Hergiswil(CH)**

(72) Erfinder: **Merkli, Peter**
**Langernweg 8**
**CH-4665 Oftringen(CH)**

(74) Vertreter: **Fillinger, Peter, Dr.**
**Rütistrasse 1a, Postfach 358**
**CH-5401 Baden(CH)**

(54) **Endlosbandförderer.**

(57) Um den fördernden Trum des Endlosbandförderers quer zu seiner Bewegungsrichtung zu führen ist vorgesehen, dass wenigstens längs einem der Trums zwischen den Seitenlinien (7, 8) Mittel (10, 14, 15) vorhanden sind, um Führungskräfte auf diesen Trum auszuüben, die sowohl senkrecht auf den Trum als auch in dessen Ebene quer zu seiner Bewegungsrichtung orientiert sind.

Fig.2

EP 0 505 679 A1

Die vorliegende Erfindung betrifft einen Endlosbandförderer gemäss dem Oberbegriff des Anspruchs 1 und eine Verwendung desselben als Endloskurvenband.

Derartige Endlosbandförderer sind bekannt und sind besonders zum Fördern von Gütern unterschiedlicher Grösse geeignet, da der durch das Förderband gebildete Bandteppich keine Zwischenräume und Kanten aufweist, an denen sich die zu fördernden Güter verklemmen können.

Nachteilig ist bei diesen Endlosbandfördern, dass die breiten Förderbänder die Tendenz zum seitlichen Ablaufen von den Förder- und Umlenkrollen haben. Schon der kleinste seitliche Versatz oder Parallelitätsfehler der Förder- und Umlenkrollen genügt zum seitlichen Ablaufen der Förderbänder. Damit diesem Nachteil abgeholfen werden kann, müssen zusätzliche Mittel zum seitlichen Führen der Förderbänder eingesetzt werden. Für gekrümmte Endlosbandförderer sind diese zusätzlichen Mittel unerlässlich.

Aufgabe der vorliegenden Erfindung ist die Schaffung einer einfachen seitlichen Führung für Endlosbandförderer, die sich für gerade und gebogene Förderstreckenabschnitte eignet. Sie sollte bevorzugt so gestaltbar sein, dass sie weder seitlich noch über dem Bandförderer zusätzlichen Raum beansprucht.

Diese Aufgabe wird erfindungsgemäss durch die im kennzeichnenden Teil des Patentanspruchs 1 angegebenen Merkmale gelöst.

Die Erfindung wird beispielsweise anhand der beiliegenden schematischen Zeichnung erläutert. Es zeigen:

Fig. 1    eine Draufsicht auf einen gekrümmten Endlosbandförderer und

Fig. 2    einen Teilschnitt in vergrösserter Darstellung gemäss Linie II-II in Fig. 1, auf dem die Führungsmittel dargestellt sind.

Die Zeichnung zeigt einen als Endloskurven-band gestalteten Endlosbandförderer. Dieser End-losbandförderer weist einen Tisch 1 auf, der eine ebene Stütz- und Gleitfläche 2 für ein Endlosband 3 bildet, das aus einem zusammenhängenden Flächengebilde besteht. In der Zeichnung ist der obere fördernde Trum des Endlosbandes sichtbar, das um konische Umlenkwalzen 4 und 5 geführt ist. Diese sind drehbar im Tisch 1 gelagert, wobei der einen Umlenkwalze 4 ein Antriebsmotor 6 zugeordnet ist. Das Endlosband 3 ist durch zwei Seitenlinien 7 und 8 begrenzt, welche auch die wirksame Breite des Förderers begrenzen.

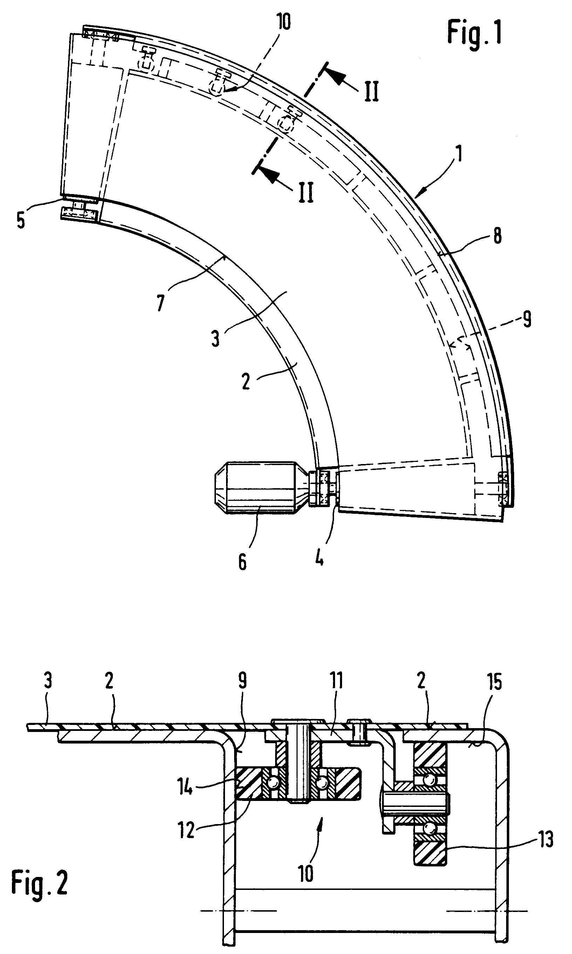

Im Bereich der äusseren Seitenlinie 8 weist die Gleitfläche 2 des Tisches 1 eine zur Bewegungsrichtung des Endlosbandes 3 parallele Durchbrechung 9 auf. Durch diese greifen in regelmässigem Abstand an der Unterseite des fördernden Trums (beim rücklaufenden Trum ist es die Oberseite) befestigte Führungselemente 10. Jedes Führungselement 10 weist ein am Endlosband 3 befestigtes Winkelstück 11 auf, an dem zwei Laufrollen 12 und 13 drehbar gelagert sind. Die Drehachsen der beiden Laufrollen 12 und 13 eines Führungselementes 10 schneiden sich unter einem rechten Winkel, wobei der Laufring der einen Rolle 12 parallel und der Laufring der anderen (13) rechtwinklig zur Gleitfläche 2 orientiert ist. Die zur Gleitfläche 2 parallele Laufrolle 12 läuft auf einer am Tisch 1 angeordneten Führungsfläche 14, was ein Abrutschen des Endlosbandes 3 von den konischen Umlenkwalzen 4 und 5 gegen das Kurvenzentrum verhindert. Um im geraden Förderstreckenabschnitt eine quer zur Bewegungsrichtung wirksame Seitenführung zu haben können zur Führungsfläche 14 parallele, mit dem Tisch 1 fest verbundene Führungsflächen (in Fig. 2 strichpunktiert angedeutet) vorgesehen sein, welche entweder mit der Laufrolle 12 oder dem Winkelstück 11 zusammenwirken.

Der Tisch 1 bildet weiter für die Laufrolle 13 eine zur Gleitfläche 2 parallele Führungsfläche 15, auf der die Laufrolle 13 abläuft und damit den fördernden Trum des Endlosbandes 3 in Anlage mit der Gleitfläche 2 hält.

Bei gekrümmten Endlosbandförderern genügt es, wenn die Führungsmittel im Bereich einer der beiden Seitenlinien, vorzugsweise im Bereich der äusseren angebracht werden. Bei den geraden Endlosbandförderern mit parallelen und zylindrischen Walzen werden die Führungsmittel vorzugsweise im Bereich beider Seitenlinien angebracht. In geraden Förderabschnitten ist es indessen auch möglich, die Führungsmittel irgendwo zwischen den Seitenlinien nicht nur im Bereich einer Seitenlinie anzubringen und die Seitenführung durch die in Fig. 2 strichpunktiert angedeuteten Führungsflächen sicher zu stellen.

**Patentansprüche**

1.    Endlosbandförderer mit einem fördernden und einem rücklaufenden Trum, welche Trums ein zusammenhängendes Flächengebilde sind, dessen Breite der Breite des wirksamen Förderbereichs entspricht und das seitlich durch eine erste bzw. zweite Seitenlinie (7, 8) begrenzt ist, dadurch gekennzeichnet, dass wenigstens längs einem der Trums zwischen den Seitenlinien (7, 8) Mittel (10, 14, 15) vorhanden sind, um Führungskräfte auf diesen Trum auszuüben, die sowohl senkrecht auf den Trum als auch in dessen Ebene quer zu seiner Bewegungsrichtung orientiert sind.

2.    Endlosbandförderer nach Anspruch 1, dadurch gekennzeichnet, dass die Mittel (10, 14, 15) parallel zur Bewegungsrichtung des Trums verlaufende Führungen (14, 15) aufweisen, an denen der Trum formschlüssig geführt ist.

3. Endlosbandförderer nach Anspruch 2, dadurch gekennzeichnet, dass die Mittel (10, 14, 15) mit dem Trum verbundene Führungselemente (10) aufweisen, die formschlüssig an den Führungen (14, 15) geführt sind.

4. Endlosbandförderer nach einem der Ansprüch 1 bis 3, dadurch gekennzeichnet, dass die Mittel (10, 14, 15) zumindest beim fördernden Trum vorhanden sind.

5. Endlosbandförderer nach Anspruch 4, dadurch gekennzeichnet, dass der fördernde Trum auf einer Ebene abgestützt ist, die vorzugsweise durch eine tischartige Fläche (2) gebildet wird.

6. Endlosbandförderer nach Anspruch 5, dadurch gekennzeichnet, dass die Führungen (14, 15) unterhalb der Ebene angeordnet sind.

7. Endlosbandförderer nach Anspruch 6, dadurch gekennzeichnet, dass die tischartige Fläche (2) eine zur Bewegungsrichtung parallele Durchbrechung (9) aufweist, durch welche die mit dem fördernden Trum verbundenen Führungselemente (10) hindurchgreifen und formschlüssig mit den Führungen (14, 15) zusammenwirken.

8. Endlosbandförderer nach einem der Ansprüche 5 bis 7, dadurch gekennzeichnet, dass die Führungen (14, 15) zwei zur Bewegungsrichtung parallele, zur Ebene (2) senkrechte Führungsflächen aufweisen, zwischen denen Teile der mit dem fördernden Trum verbundenen Führungselemente (10) gleitend oder rollend geführt sind.

9. Endlosbandförderer nach einem der Ansprüche 5 bis 8, dadurch gekennzeichnet, dass die Führungen (14, 15) unterhalb der Ebene (2) eine zu dieser parallele Führungsebene (15) aufweisen, welche dem fördernden Trum abgewandt ist und auf der mit dem fördernden Trum verbundene Führungselemente (10) mit Teilen gleitend oder rollend geführt sind.

10. Endlosbandförderer nach einem der Ansprüche 1 bis 9, dadurch gekennzeichnet, dass die Mittel (10, 14, 15) im Bereich einer der beiden Seitenlinien (7, 8) angeordnet sind.

11. Endlosbandförderer nach einem der Ansprüche 1 bis 9, dadurch gekennzeichnet, dass im Bereich beider Seitenlinien (7, 8) Mittel (10, 14, 15) angeordnet sind.

12. Verwendung eines Endlosbandförderers nach einem der Ansprüche 1 bis 7 oder 10 als Endloskurvenband mit zwei konischen Umlenkwalzen (4, 5) und mit einem fördernden und einem rücklaufenden Trum, wobei die Trums durch eine innere kürzere und eine äussere längere Seitenlinie (7 bzw. 8) begrenzt sind, dadurch gekennzeichnet, dass die Mittel (10, 14, 15) eine zur Bewegungsrichtung parallele und zur Ebene (2) senkrechte Führungsfläche (14) aufweisen, mit der mit dem fördernden Trum verbundene Teile (12) Führungselemente (10) gleitend oder rollend geführt sind, derart, dass die Führungsfläche (14) eine vom Kurvenzentrum weggerichtete Kraft auf die Führungselemente (10) ausübt.

13. Endloskurvenband nach Anspruch 12, dadurch gekennzeichnet, dass die Mittel (10, 14, 15) unterhalb der Ebene (2) eine zu dieser parallele Führungsebene (15) aufweisen, welche dem fördernden Trum abgewandt ist und auf der mit dem fördernden Trum verbundene Führungselemente (10) mit Teilen gleitend oder rollend geführt sind.

Fig.1

Fig.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | NL-A-7 600 514 (AMMERAAL NEDERLAND)<br><br>* das ganze Dokument *<br>--- | 1-9,12, 13 | B65G15/02 |
| P,X | US-A-5 038 925 (RODMAN W. CHRYSLER)<br><br>* das ganze Dokument *<br>--- | 1-9,12, 13 | |
| X | US-A-3 951 256 (GUREWITZ)<br><br>* das ganze Dokument *<br>--- | 1-9,12, 13 | |
| A | US-A-3 358 811 (G. B. GERRISH)<br>* Spalte 2, Zeile 29 - Zeile 42; Abbildungen *<br><br>----- | 10,11 | |

**RECHERCHIERTE SACHGEBIETE (Int. Cl.5)**

B65G

Der vorliegende Recherchenbericht wurde für alle Patentansprüche erstellt

| Recherchenort | Abschlußdatum der Recherche | Prüfer |
|---|---|---|
| DEN HAAG | 19 JUNI 1992 | VAN ROLLEGHEM F. |

EPO FORM 1503 03.82 (P0403)